(19) **Europäisches Patentamt / European Patent Office / Office européen des brevets**

(11) **EP 4 621 383 A1**

(12) **EUROPEAN PATENT APPLICATION**
published in accordance with Art. 153(4) EPC

(43) Date of publication:
**24.09.2025 Bulletin 2025/39**

(21) Application number: **22965771.3**

(22) Date of filing: **16.11.2022**

(51) International Patent Classification (IPC):
**G01N 19/00** (2006.01)    **G01N 3/00** (2006.01)
**G01N 11/14** (2006.01)

(52) Cooperative Patent Classification (CPC):
**G01N 3/00; G01N 11/14; G01N 19/00**

(86) International application number:
**PCT/JP2022/042461**

(87) International publication number:
**WO 2024/105795 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kyocera Corporation**
**Kyoto-shi, Kyoto 612-8501 (JP)**

(72) Inventors:
• **KIMURA, Sho**
  **Kyoto-shi, Kyoto 612-8501 (JP)**
• **MAEDA, Kazutaka**
  **Kyoto-shi, Kyoto 612-8501 (JP)**
• **OSHIMA, Takuya**
  **Kyoto-shi, Kyoto 612-8501 (JP)**

(74) Representative: **TBK**
**Bavariaring 4-6**
**80336 München (DE)**

(54) **EVALUATION METHOD AND EVALUATION DEVICE**

(57)    An evaluation method according to an aspect of the present disclosure includes a strain forming step of applying vibration to a material containing a dispersion medium and a particulate dispersoid dispersed in the dispersion medium to cause strain to be generated, a measurement step of measuring a loss tangent of the material in which the strain is generated, for each frequency of vibration, and an evaluation step of evaluating formability of the material based on a minimal value or a maximal value of the loss tangent. Magnitude of the strain in the strain forming step is sufficient to disrupt an array of the dispersoid in the material.

FIG. 8

**EP 4 621 383 A1**

**Description**

TECHNICAL FIELD

An aspect of the present disclosure relates to an evaluation method and an evaluation device for evaluating formability of a material.

BACKGROUND OF INVENTION

Patent Document 1 discloses a viscoelasticity measurement method for allowing accurate measurement of viscoelasticity even for a substance having a high elastic modulus. In the viscoelasticity measurement method, viscoelasticity of a sample is measured in a state where the sample is held between a pair of disk-shaped jigs. As the disk-shaped jig, a disk-shaped jig including a projection in which a cross-sectional area is made smaller as a distance to a tip is decreased is used at a surface in contact with the sample.

CITATION LIST

PATENT LITERATURE

Patent Document 1: JP 07-260673 A

SUMMARY

An evaluation method according to an aspect of the present disclosure includes forming strain to be generated by applying vibration to a material containing a dispersion medium and particulate dispersoid dispersed in the dispersion medium, a measurement step of measuring a loss tangent for the material in which the strain is generated, for each frequency of the vibration, and an evaluation step of evaluating formability of the material based on (i) a minimal value or a maximal value of the loss tangent with respect to the frequency, or (ii) a frequency at which the minimal value is exhibited or a frequency at which the maximal value is exhibited, wherein magnitude of the strain caused to be generated in the material in the strain forming step is sufficient to disrupt an array of the dispersoid in the material.

An evaluation device according to an aspect of the present disclosure includes a strain former configured to generate strain by applying vibration to a material containing a dispersion medium and particulate dispersoid dispersed in the dispersion medium, a measurer configured to measure a loss tangent for the material in which the strain is generated, for each frequency of the vibration, and an evaluator configured to evaluate formability of the material based on (i) a minimal value or a maximal value of the loss tangent with respect to the frequency, or (ii) a frequency at which the minimal value is exhibited or a frequency at which the maximal value is exhibited, wherein magnitude of the strain caused to be generated in the material by the strain former is sufficient to disrupt an array of the dispersoid in the material.

BRIEF DESCRIPTION OF THE DRAWINGS

FIG. 1 is a diagram illustrating a configuration of an evaluation device according to the present disclosure.
FIG. 2 is a diagram for explaining an absolute value $|G^*|$ of a complex elastic modulus and $\tan\delta$ (a loss tangent) of a material.
FIG. 3 includes graphs each showing an example of a measurement result of a material obtained by changing a strain amount to be applied to the material at a strain former.
FIG. 4 is a graph showing examples of a relationship between frequency and $|G^*|$ obtained by changing a frequency of vibration to be applied to the material at the strain former.
FIG. 5 is a graph showing examples of a relationship between the frequency and $\tan\delta$ obtained by changing the above frequency.
FIG. 6 is a graph showing an example of a relationship between fraction defective and minimal value and maximal value of $\tan\delta$.
FIG. 7 is a graph showing an example of a relationship between fraction defective and frequency at which $\tan\delta$ exhibits minimal value or maximal value.
FIG. 8 is a flowchart illustrating an example of an evaluation method according to the evaluation device of an aspect of the present disclosure.

## DESCRIPTION OF EMBODIMENTS

Configuration Example of Evaluation Device 1

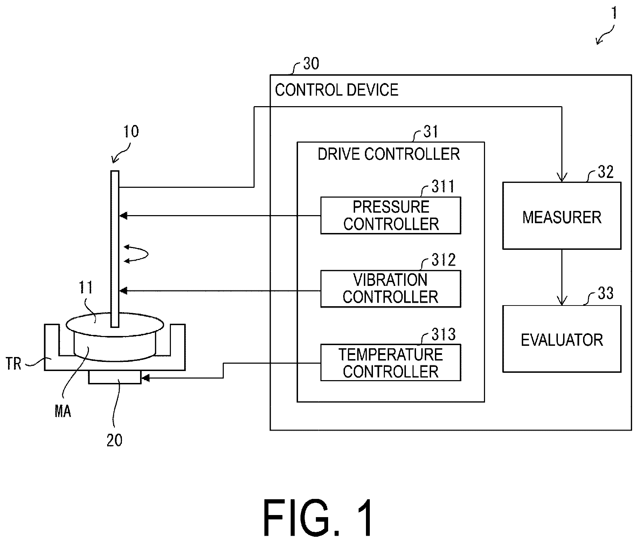

FIG. 1 is a diagram illustrating a configuration of an evaluation device 1 according to the present disclosure. The evaluation device 1 may include a tray TR, a measurement jig 10, a thermoelectric conversion element 20, and a control device 30. Above the tray TR, a material MA to be evaluated at the evaluation device 1 is placed as a sample.

The material MA may contain a dispersion medium and particulate dispersoid dispersed in the dispersion medium. As an example, the material MA may be a so-called highviscosity material. That is, in a case where the dispersoid has any array at a certain point in time, the dispersoid may maintain the original array until external force having magnitude sufficient to disrupt the array is applied to the material MA. The material MA may be, for example, a material in a clay-like state. For example, the material MA may be slurry. To be specific, the material MA may be, for example, a mixture of ceramic particles and a solvent such as water in a ceramic material, or a mixture of an electrode active material and a solvent such as water in a storage battery. The material MA may be an electrode material in a lithium ion battery, which is made of a mixture of an electrode active material and a solvent. When the material MA is an electrode material in a lithium ion battery, the electrode material can be evaluated with high accuracy at the evaluation device 1 according to the present disclosure. The electrode material in the lithium ion battery will be described later. However, the material MA according to an aspect of the present disclosure may be any material that can be evaluated at the evaluation device 1 and is not limited to the above example.

The evaluation device 1 is a device that evaluates formability of the material MA. The material MA may be, for example, a material to be coated on a coating target. In this case, "the formability of the material MA" in the present specification can be interpreted as, for example, "fluidity of the material MA". That is, a material having high formability can be interpreted as a material having high fluidity. A material having low formability can be interpreted as a material having low fluidity. As an example, in dynamic viscoelasticity measurement to be described later, when a frequency of vibration is 5 Hz and a strain amount is 0.5%, an absolute value of a complex elastic modulus $|G^*|$ of the material MA may be equal to or greater than 100,000 Pa.

A ratio of a mass of dispersoid to a mass of the material MA may be equal to or greater than 60 wt%. According to the evaluation method of an aspect of the present disclosure, the formability of the material MA having the above ratio can be accurately evaluated. According to the evaluation method of an aspect of the present disclosure, for example, formability of a ceramic green body can also be evaluated.

The measurement jig 10 may be designed to perform dynamic viscoelasticity measurement on the material MA. In other words, the measurement jig 10 may be configured to be able to measure dynamic viscoelasticity of the material MA. Therefore, for example, the measurement jig 10 may be designed to strain the material MA by vibration and output a signal corresponding to a response from the material MA. In other words, the measurement jig 10 may be configured to be able to output a signal corresponding to the above response from the material MA. As an example, the measurement jig 10 may output a complex elastic modulus $G^*$ in accordance with the response from the material MA. In other words, the measurement jig 10 may be configured to be able to output the complex elastic modulus $G^*$. The control device 30 (more specifically, a measurer 32 to be described later) may derive the absolute value of the complex elastic modulus $|G^*|$ and $\tan\delta$ (a loss tangent) of the material MA from the complex elastic modulus $G^*$.

For example, the measurement jig 10 may include a display such as a liquid crystal display or an organic electro luminescence (EL) display and may be configured to be able to output the complex elastic modulus $G^*$ by displaying an image on the display. For example, the measurement jig 10 may include a speaker, and may be configured to be able to output the complex elastic modulus $G^*$ by outputting sound from the speaker.

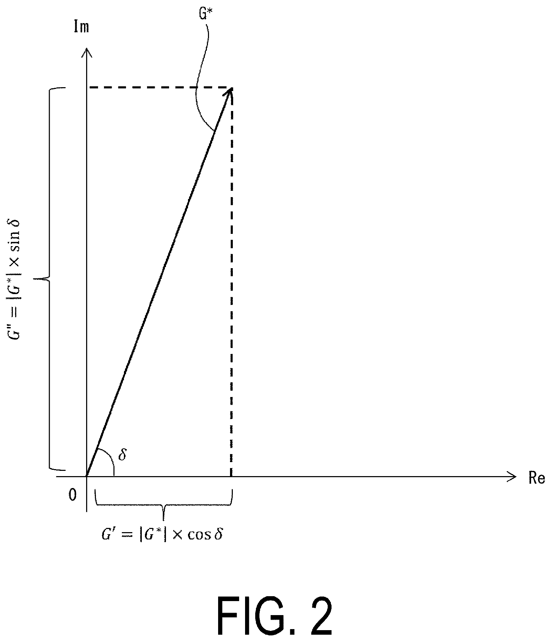

FIG. 2 is a diagram for explaining a relationship between the complex elastic modulus $G^*$ of the material MA and $|G^*|$ and $\tan\delta$. The complex elastic modulus $G^*$ can be used as an index indicating macroscopic hardness of the material MA.

As illustrated in FIG. 2, a phase (argument) of the complex elastic modulus $G^*$ is represented as $\delta$. In this case, a real part $G'$ and an imaginary part $G''$ of the complex elastic modulus $G^*$ are represented as follows, respectively:

$$G' = |G^*| \times \cos\delta \quad (1)$$

$$G'' = |G^*| \times \sin\delta \quad (2).$$

Thus, $\tan\delta$ is represented as follows:

$\text{Tan}\delta = \sin\delta/\cos\delta = G''/G' \quad (3)$. $\text{Tan}\delta$ represents an inclination of the complex elastic modulus $G^*$ on a complex plane. $\text{Tan}\delta$ can be used as an index indicating whether a liquid property or a solid property of the material MA is dominant. In the example of FIG. 2, $\delta$ can take a value from 0° to 90°. Thus, $\tan\delta$ can take a value from 0 to $\infty$.

G" and G' correspond to the liquid property and the solid property of the material MA, respectively. When $\tan\delta$ is great (in other words, when $\delta$ is great), G" is dominant compared to G'. In this case, the liquid property of the material MA is dominant compared to the solid property of the material MA. Therefore, as $\tan\delta$ increases, physical properties of the material MA can be considered to become closer to those of an ideal viscous body.

On the other hand, when $\tan\delta$ is less (in other words, when $\delta$ is small), G' is dominant compared to G". In this case, the solid property of the material MA is dominant compared to the liquid property of the material MA. Therefore, as $\tan\delta$ decreases, the physical properties of the material MA can be considered to become closer to those of an ideal elastic body.

Reference is again made to FIG. 1. The measurement jig 10 may include a strain former 11 as a site in contact with the material MA. The strain former 11 may be designed to cause strain to be generated in the material MA by applying vibration to the material MA. Therefore, the evaluation method according to an aspect of the present disclosure may include a strain forming step of causing strain to be generated in the material MA.

The strain forming step may be performed at the strain former 11. The strain former 11 may include a disk-shaped probe. When the probe rotates around a rotation shaft, strain is generated in the material MA. As will be described later, magnitude of the strain caused to be generated in the material MA at the strain former 11 (in other words, magnitude of the strain caused to be generated in the material MA in the strain forming step) may be sufficient to disrupt an array of the dispersoid in the material MA. Here, "the magnitude sufficient to disrupt the array of the dispersoid in the material MA" may mean such magnitude that 50% or more of the dispersoid in the material MA is displaced from a position before the strain is generated and does not return to the original position.

By reducing slipping between the material MA and the strain former 11, accuracy of measurement and evaluation on the material MA can be improved. Therefore, irregularities may be provided at a surface of the strain former 11 in contact with the material MA by, for example, knurling.

The thermoelectric conversion element 20 may be attached to the tray TR. The thermoelectric conversion element 20 may include any heating element and/or cooling element. Examples of the heating element include a resistive element. Examples of the cooling element include a Peltier element.

The control device 30 comprehensively controls each unit of the evaluation device 1. In other words, the control device 30 is configured to be able to control each unit of the evaluation device 1. The control device 30 may include a drive controller 31, a measurer 32, and an evaluator 33. The drive controller 31 may include a pressure controller 311, a vibration controller 312, and a temperature controller 313.

The pressure controller 311 may control pressure to be applied to the material MA at the strain former 11. In other words, the pressure controller 311 is configured to be able to control the pressure to be applied to the material MA at the strain former 11. Therefore, the strain former 11 can cause strain to be generated in the material MA while applying the pressure designated at the pressure controller 311 to the material MA.

The vibration controller 312 may control rotation of the strain former 11. In other words, the vibration controller 312 is configured to be able to control the rotation of the strain former 11. When the vibration controller 312 controls the rotation of the strain former 11 and applies vibration to the material MA, the strain is generated in the material MA. The vibration controller 312 can also change the frequency of vibration to be applied to the material MA at the strain former 11.

The temperature controller 313 may control the thermoelectric conversion element 20. In other words, the temperature controller 313 is configured to be able to control the thermoelectric conversion element 20. As an example, the temperature controller 313 may control a temperature of the thermoelectric conversion element 20. In other words, the temperature controller 313 is configured to be able to control the temperature of the thermoelectric conversion element 20. In this way, the temperature controller 313 can set a temperature of the material MA to a predetermined temperature via the thermoelectric conversion element 20.

The measurer 32 may measure $\tan\delta$ (a loss tangent) of the strained material MA for each frequency of vibration applied to the material MA. Therefore, the evaluation method according to an aspect of the present disclosure may include a measurement step of measuring $\tan\delta$ of the material MA for each frequency described above. The measurement step may be performed at the measurer 32.

The measurer 32 may acquire the complex elastic modulus G* from the measurement jig 10 each time the strain former 11 applies vibration of a predetermined frequency to the material MA. As described above, the measurer 32 may derive the absolute value |G*| of the complex elastic modulus of the material MA from the complex elastic modulus G*. The measurer 32 may derive $\tan\delta$ of the material MA from the complex elastic modulus G*.

The evaluator 33 may evaluate the formability of the material MA based on a measurement result obtained at the measurer 32. For example, as will be described later, the evaluator 33 may evaluate the formability of the material MA based on a minimal value or a maximal value of $\tan\delta$ with respect to the frequency of vibration to be applied to the material MA. Therefore, the evaluation method according to an aspect of the present disclosure may include an evaluation step of evaluating the formability of the material MA based on the minimal value or the maximal value described above. The evaluation step may be performed at the evaluator 33. For example, the evaluator 33 may evaluate the formability of the material MA by comparing the minimal value or the maximal value of $\tan\delta$ with a threshold value. The threshold value may be appropriately set in consideration of a relationship between a fraction defective and the minimal value or the maximal

value of tan$\delta$, which will be described later, and magnitude of the strain amount.

Relationship between Strain Amount and |G*| and tan$\delta$

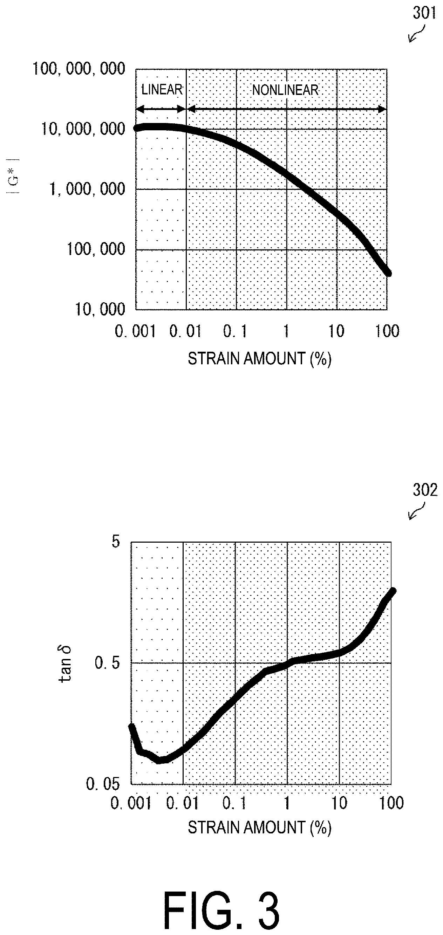

The inventors of the present application (hereinafter simply referred to as "the inventors") performed various measurements on the material MA using the evaluation device 1. FIG. 3 illustrates an example of a result of measurement of the material MA obtained by changing the strain amount of the material MA (hereinafter, simply referred to as the "strain amount") at the strain former 11. The strain amount may be interpreted as magnitude of strain of the material MA.

The material MA in the measurement of the example of FIG. 3 was a mixture (electrode material) of an electrode active material, a conductive additive, a binder, and a solvent, which is used for an electrode body constituting a negative electrode of a storage battery. The material MA may be an electrode material which is a mixture of an electrode active material, a conductive additive, a binder, and a solvent used for an electrode body constituting a positive electrode of a storage battery. Depending on a ratio of a solid content (dispersoid) composed of the electrode active material, the conductive additive, and the binder in the electrode material, the electrode material may be in a slurry form or a clay-like state.

The electrode active material of the positive electrode may be, for example, lithium cobalt oxide, lithium nickel oxide, lithium iron phosphate, or lithium manganese oxide. The electrode active material of the negative electrode may be, for example, graphite or lithium titanate. The conductive additive may be, for example, carbon black made of acetylene black or the like. However, the electrode active material of the positive electrode, the electrode active material of the negative electrode, and the conductive additive are not limited thereto.

The binder used in the positive electrode may be polyvinylidene fluoride (PVdF) or polytetrafluoroethylene (PTFE). The solvent used in the positive electrode may be N-methyl-2-pyrrolidone (NMP). The binder used in the negative electrode may be carboxymethyl cellulose (CMC) or styrene-butadiene copolymer latex (SBR). The solvent used in the negative electrode may be purified water.

A rheometer (MCR301 manufactured by Anton Paar Ltd.) was used as the measurement jig 10. To be more specific, a shape of the strain former 11 used for the measurement was a circle having a diameter of 8 mm. The strain former 11 was in contact with an upper surface of the material MA formed into a cylindrical shape. A material of the strain former 11 used for the measurement was stainless steel.

In the measurement, the strain amount was changed over a range from 0.001% to 100%. The strain amount referred to here is a value calculated by the following Equation (1).

$$\gamma = \theta \times R/H \qquad (1)$$

In Equation (1), $\gamma$ is the strain amount, $\theta$ is a displacement angle (rotation amount) of the strain former 11, R is a radius of the strain former 11, and H is a gap between the strain former 11 and the tray TR. That is, the strain amount means a shift amount of an outer edge portion of an uppermost surface of the material MA with respect to a height of the material MA formed into a cylindrical shape. In the measurement, the frequency of vibration to be applied to the material MA at the strain former 11 was set to a fixed value of 1 Hz.

In FIG. 3, a reference numeral 301 denotes a graph representing an example of a relationship between the strain amount obtained by the measurement and |G*|. In the graph denoted by the reference numeral 301, a horizontal axis represents the strain amount, and a vertical axis represents |G*|.

As shown in the graph denoted by the reference numeral 301, |G*| has a substantially linear relationship with respect to the strain amount in a range where the strain amount is equal to or less than 0.01%. More specifically, in the range where the strain amount is equal to or less than 0.01%, |G*| is substantially constant regardless of the strain amount. This suggests that the array of the dispersoid in the material MA is maintained in the range where the strain amount is equal to or less than 0.01%.

On the other hand, in a range where the strain amount is greater than 0.01%, |G*| has a nonlinear relationship with respect to the strain amount. More specifically, in the range where the amount of strain is greater than 0.01%, |G*| decreases nonlinearly with an increase in the strain amount. This suggests that the array of the dispersoid in the material MA is disrupted in the range where the strain amount is greater than 0.01%.

In FIG. 3, a reference numeral 302 denotes a graph showing an example of the relationship between the strain amount obtained by the above measurement and tan$\delta$. In the graph denoted by the reference numeral 301, a horizontal axis represents the strain amount, and a vertical axis represents tan$\delta$.

As shown in the graph denoted by the reference numeral 302, in the range where the strain amount is equal to or less than 0.01% (a range where the array of the dispersoid in the material MA is considered to be maintained), tan$\delta$ tends to decrease with an increase in the strain amount and then increase with an increase in the strain amount. On the other hand, in the range where the strain amount is greater than 0.01% (a range where the array of the dispersoid in the material MA is considered to be disrupted), tan$\delta$ tends to increase with an increase in the strain amount.

Relationship between Frequency and |G*|

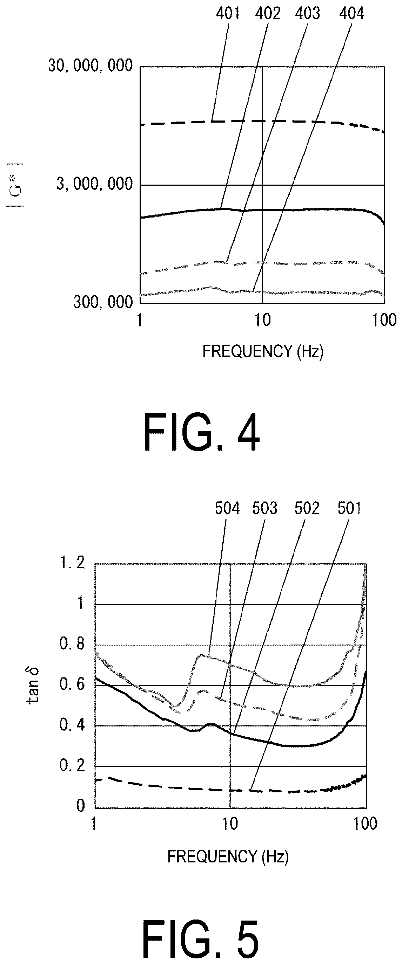

FIG. 4 is a graph showing examples of a relationship between the frequency and |G*| obtained by changing the frequency of vibration to be applied to the material MA at the strain former 11 (hereinafter simply referred to as the "frequency"). The material MA and the strain former 11 in the measurement of the example of FIG. 4 are the same as the material MA and the strain former 11 in the measurement of the example of FIG. 3. In the measurement of the example of FIG. 4, the frequency was changed over a range from 1 to 100 Hz. In the graph of FIG. 4, a horizontal axis represents the frequency, and a vertical axis represents |G*|.

In FIG. 4, a reference numeral 401 denotes a plot showing a measurement result obtained when the strain amount is 0.01%. A reference numeral 402 denotes a plot showing a measurement result obtained when the strain amount is 1%. A reference numeral 403 denotes a plot showing a measurement result obtained when the strain amount is 5%. A reference numeral 404 denotes a plot showing a measurement result obtained when the strain amount is 10%.

As can be understood from the above description of FIG. 3, when the strain amount is 0.01%, the array of the dispersoid in the material MA is considered to be maintained. On the other hand, when the strain amounts are 1%, 5%, and 10%, the array of the dispersoid in the material MA is considered to be disrupted.

In the example shown in FIG. 4, |G*| tends to decrease with an increase in the strain amount. On the other hand, for any of the strain amounts, |G*| is substantially constant regardless of the frequency. This indicates that |G*| has dependence on the strain amount but has little dependence on the frequency.

Relationship between Frequency and tan$\delta$

FIG. 5 is a graph showing examples of a relationship between the frequency and tan$\delta$ obtained by changing the frequency. The material MA and the strain former 11 in the example of FIG. 5 are the same as those in the example of FIG. 4. In the graph of FIG. 5, a horizontal axis represents the frequency, and a vertical axis represents tan$\delta$.

In FIG. 5, a reference numeral 501 denotes a plot showing a measurement result obtained when the strain amount is 0.01%. A reference numeral 502 denotes a plot showing a measurement result obtained when the strain amount is 1%. A reference numeral 503 denotes a plot showing a measurement result obtained when the strain amount is 5%. A reference numeral 504 denotes a plot showing a measurement result obtained when the strain amount is 10%.

As denoted by the reference numeral 501, when the strain amount is 0.01%, tan$\delta$ does not have a significant minimal value and a significant maximal value in a measurement frequency band (1 to 100 Hz). On the other hand, as denoted by the reference numerals 502 to 504, when the strain amount is equal to or greater than 1%, tan$\delta$ has a significant minimal value and a significant maximal value in the measurement frequency band. To be more specific, when the strain amount is equal to or greater than 1%, tan$\delta$ has a significant minimal value around 6 Hz and has a significant maximal value around 8 Hz. As the strain amount increases, the minimal value and the maximal value of tan$\delta$ also increase.

The measurement result in the example of FIG. 5 shows that frequency characteristics of tan$\delta$ become more remarkable as the strain amount increases. The measurement result suggests that when the array of the dispersoid in the material MA is disrupted, the frequency characteristics of tan$\delta$ display a specific pattern.

Therefore, it is expected that, when the array of the dispersoid in the material MA is disrupted, useful information about the array of the dispersoid in the material MA can be obtained from the frequency characteristics of tan$\delta$. For example, the strain amount (magnitude of the strain) caused to be generated in the material MA in the above strain forming step may be sufficient to disrupt the array of the dispersoid in the material MA.

As described above, even when the strain amount is 0.1%, the array of the dispersoid in the material MA is considered to be disrupted. As a result of further study by the inventors, tan$\delta$ was confirmed to have a significant minimal value around 6 Hz and have a significant maximal value around 8 Hz even when the strain amount was 0.1%. Therefore, it is expected that, when the strain amount is equal to or greater than 0.1%, useful information about the array of the dispersoid in the material MA can be obtained from the frequency characteristics of tan$\delta$.

EXAMPLES

For example, when the material MA is an electrode active material, formability of the material MA can be represented by an occurrence rate of defective products (a fraction defective) in a case where an electrode body is manufactured by coating the material MA to a conductor.

The inventors manufactured nine types of samples and measured fraction defective. Each of the nine types of samples is an electrode material in a clay-like state that is used for an electrode body constituting a negative electrode of a storage battery, obtained by mixing, into purified water, graphite as an electrode active material to which acetylene black as a conductive additive and carboxymethyl cellulose as a binder are added. Each sample was prepared by changing (i) a particle diameter of the electrode active material, (ii) a ratio of a solid content composed of the electrode active material, the conductive additive, and the binder in the electrode material, (iii) mixing conditions of the electrode active material and the conductive additive in a mixer, and (iv) kneading conditions of the electrode material in a kneader. Table 1 shows the conditions, the absolute value |G*| of the complex elastic modulus, and the fraction defective of the nine types of samples. |G*| in Table 1 is a measurement result obtained with the strain amount of 0.5% and at the frequency of 5 Hz.

[Table 1]

|  | Electrode active material particle diameter [μm] | Solid content ratio [wt%] | Mixing condition | Kneading condition | |G*| [Pa] | Fraction defective |
|---|---|---|---|---|---|---|
| Sample 1 | 20 | 72.5 | Middle | High | 168,857 | 5 |
| Sample 2 | 20 | 70.0 | Middle | Middle | 193,977 | 4 |
| Sample 3 | 20 | 72.5 | Low | Middle | 281,518 | 3 |
| Sample 4 | 20 | 72.5 | High | Middle | 282,161 | 5 |
| Sample 5 | 20 | 72.5 | Middle | Middle | 308,049 | 4 |
| Sample 6 | 20 | 72.5 | Low | Low | 584,220 | 2 |
| Sample 7 | 20 | 72.5 | Middle | Low | 695,230 | 2 |
| Sample 8 | 10 | 72.5 | Middle | Middle | 746,229 | 1 |
| Sample 9 | 20 | 75.0 | Middle | Middle | 1,196,292 | 1 |

In Table 1, the "mixing condition" indicates a rotation speed of a blade in the mixer for mixing the materials in three stages. The low rotation speed is the lowest and the high rotation speed is the greatest. The middle rotation speed is between low and high. In Table 1, the "kneading condition" indicates a time for mixing the material at the mixer in three stages. The low mixing time is the shortest and the high mixing time is the longest. The middle mixing time is between low and high.

In Table 1, the "fraction defective" were ranked in the following five stages based on a rate at which the material MA could be coated without defects when the material MA was coated 100 times.

Rank 5: Coating was performed without defects at a probability equal to or greater than 90%.
Rank 4: Coating was performed without defects at a probability equal to or greater than 80% and less than 90%.
Rank 3: Coating was performed without defects at a probability equal to or greater than 70% and less than 80%.
Rank 2: Coating was performed without defects at a probability equal to or greater than 40% and less than 70%.
Rank 1: Coating was performed without defects at a probability of less than 40%.

The term "defect" as used herein refers to a coating defect such as a crack appearing in an image of an electrode body manufactured by coating a conductor with the material MA.

Relationship between Fraction Defective and Minimal Value or Maximal Value of Tanδ

For example, when the material MA is an electrode active material, formability of the material MA can be represented by an occurrence rate of defective products (a fraction defective) in a case where an electrode body is manufactured by coating the conductor with the material MA. The inventors have studied a relationship between the fraction defective and the minimal value and the maximal value of tanδ.

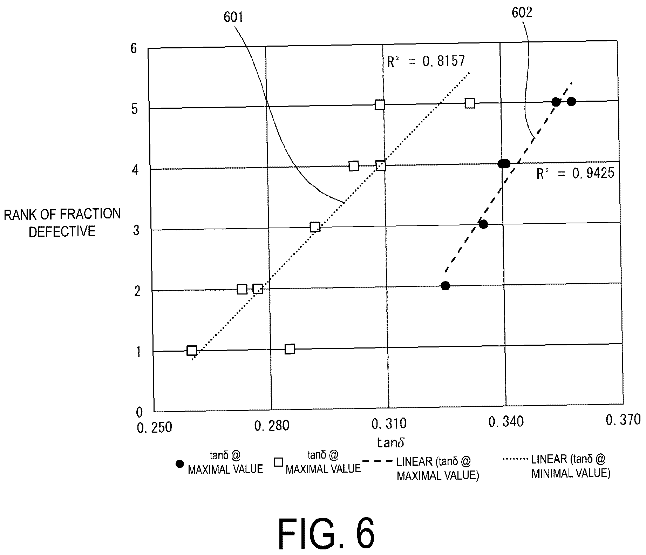

FIG. 6 is a graph showing an example of the relationship between the fraction defective and the minimal values and the maximal values of tanδ, obtained by the inventors. In the example of FIG. 6, tanδ was measured for the nine types of samples shown in Table 1. For the measurement in the example of FIG. 6, the same rheometer as in the examples of FIGs. 3 to 5 was used as the measurement jig 10. However, a shape of the strain former 11 used for the measurement in the example of FIG. 6 was a circle having a diameter of 40 mm. In the measurement, a frequency was changed over a range from 1 to 50 Hz. On the other hand, a strain amount is set to a constant value of 0.5%. Therefore, in the measurement, an array of dispersoid in the material MA is disrupted.

In the graph of FIG. 6, a vertical axis represents the rank of the fraction defective, and a horizontal axis represents the minimal values and the maximal values of tanδ. In the graph of FIG. 6, a plurality of data points respectively indicating measured values of the fraction defective, and the minimal values and maximal values of tanδ are plotted. In FIG. 6, a white square plot represents data of the minimal value, and a black circle plot represents data of the maximal value. Straight lines 601 and 602 in FIG. 6 represent approximate straight lines obtained by linear regression using the plurality of data points. The straight line 601 represents an approximate straight line related to a relationship between the fraction defective and the minimal value of $\tan\delta$. The straight line 602 represents an approximate straight line related to a relationship between the fraction defective and the maximal value of $\tan\delta$.

However, from the data of the maximal value of $\tan\delta$, the data of Samples 7 to 9 in Table 1 are excluded. This is because it is presumed that when $|G^*|$ is equal to or greater than 600,000 Pa, the material MA itself becomes brittle and is disrupted due to too much proceeding of strain, and thus the maximal value of $\tan\delta$ becomes too high and an accurate value cannot be obtained.

As shown in FIG. 6, $\tan\delta$ was confirmed to tend to increase as the fraction defective improved. In other words, the fraction defective was confirmed to tend to be worse as $\tan\delta$ decreased. Thus, the straight lines 601 and 602 in the example of FIG. 6 have a positive inclination.

Examples of an index value indicating how much a regression line fits a plurality of data points include a coefficient of determination $R^2$. $R^2$ takes a value from 0 to 1. For the greater $R^2$, the regression line can be said to favorably explain the plurality of data points. In other words, the plurality of data points can be said to have a correlation indicated by the regression line. In particular, when $R^2$ is equal to or greater than 0.65, the regression line can be said to sufficiently favorably describe the plurality of data points. In other words, when $R^2$ is equal to or greater than 0.65, the plurality of data points can be said to have a high correlation.

When the inventors calculated the coefficient of determination $R^2$ for the straight lines 601 and 602, $R^2 = 0.8157$ for the straight line 601 and $R^2 = 0.9425$ for the straight line 602. As described above, the inventors have found that the correlation between the fraction defective and the minimal value and the maximal value of $\tan\delta$ was high through the measurement results in the example of FIG. 6. In other words, the inventors have found that the minimal value and the maximal value of $\tan\delta$ were highly correlated with the formability of the material MA.

Evaluation Method Based on Minimal Value or Maximal Value of $\tan\delta$

Based on the above-described experimental results, the inventors have found a novel idea of "evaluating the formability of the material MA based on the minimal value or the maximal value of $\tan\delta$ when the array of the dispersoid in the material MA is disrupted".

The evaluation method according to an aspect of the present disclosure may include the strain forming step, the measurement step, and the evaluation step described above. Magnitude of the strain amount in the strain forming step may be sufficient to disrupt the array of the dispersoid in the material MA. According to the evaluation method, a minimal value or a maximal value of $\tan\delta$ can be caused to be generated in a specific frequency region. Therefore, the formability of the material MA can be evaluated based on the minimal value or the maximal value. Therefore, the evaluation device 1 may be designed to be able to perform the strain forming step, the measurement step, and the evaluation step.

As an example, in the evaluation device 1, a threshold value corresponding to the minimal value or the maximal value of $\tan\delta$ may be set. The threshold value may be set as a minimal value or a maximal value of $\tan\delta$ corresponding to a predetermined fraction defective. Therefore, for example, with reference to the straight line 601, when the threshold value is set to the minimal value of $\tan\delta$ in a case where the strain amount is 0.5% so that the fraction defective reaches or exceeds Rank 3, the threshold value may be set to 0.29. With reference to the straight line 602, when the threshold value is set to the maximal value of $\tan\delta$ in the case where the strain amount is 0.5% so that the fraction defective reaches or exceeds Rank 3, the threshold value may be set to 0.33, and $|G^*|$ may be set to be less than 600,000 Pa.

The evaluator 33 may evaluate the formability of the material MA by comparing the minimal value or the maximal value of $\tan\delta$ with the threshold value. When the minimal value or the maximal value of $\tan\delta$ is equal to or greater than the threshold value, the evaluator 33 may determine that the formability of the material MA is favorable. As described above, the material MA can be regarded as having physical properties close to those of an ideal viscous body when $\tan\delta$ is great. Therefore, when the minimal value or the maximal value of $\tan\delta$ is equal to or greater than the threshold value, the material MA is considered to be suitably coated onto a subject. When the material MA is a mixture of an electrode active material and an electrolyte, the subject may be a conductor constituting an electrode.

On the other hand, when the minimal value or the maximal value of $\tan\delta$ is less than the threshold value, the evaluator 33 may determine that the formability of the material MA is defective. As described above, the material MA can be regarded as having physical properties close to those of an ideal elastic body when $\tan\delta$ is small. Therefore, when the minimal value or the maximal value of $\tan\delta$ is less than the threshold value, the material MA is considered not to be suitably coated onto a conductor.

It is expected that, when the strain amount is equal to or greater than 0.1%, useful information about the array of the dispersoid in the material MA can be obtained from the frequency characteristics of $\tan\delta$. For example, the magnitude of the strain caused to be generated in the material MA in the strain forming step may be equal to or greater than 0.1%. As another example, as understood from the example of FIG. 5 described above, the magnitude of the strain caused to be generated in the material MA in the strain forming step may be equal to or greater than 1%.

In the evaluation method according to an aspect of the present disclosure, the temperature of the material MA may be maintained constant during the strain forming step and the measurement step. Thus, influence of a temperature change of the material MA on tan$\delta$ can be reduced. Therefore, accuracy of the measurement and evaluation of the material MA can be enhanced. For example, by controlling the thermoelectric conversion element 20 by the temperature controller 313, the temperature of the material MA can be maintained constant.

A "constant temperature" in the present specification may be interpreted to refer to a "substantially constant temperature". As an example, a temperature change of the material MA in the measurement step may fall within a range of $\pm0.1°C$.

In the evaluation method according to an aspect of the present disclosure, in the strain forming step, pressure when the measurement jig 10 (more specifically, the strain former 11) applies vibration to the material MA may be maintained constant. Accordingly, influence of a change in the pressure applied to the material MA on tan$\delta$ can be reduced. Therefore, accuracy of the measurement and evaluation of the material MA can be enhanced. For example, by controlling the strain former 11 at the pressure controller 311, the pressure applied to the material MA can be maintained constant.

A "constant pressure" in the present specification may be interpreted to refer to a "substantially constant load". As an example, a change in load applied to the material MA in the measurement step may fall within a range of $\pm0.25$ N.

As an example, the evaluation device 1 may include a load detector that detects a load to be applied to the material MA at the strain former 11. The load detector may be, for example, a load cell attached to the strain former 11. In this case, the pressure controller 311 may control the strain former 11 based on the load detected by the load detector. In other words, the pressure controller 311 is configured to be able to control the strain former 11 based on the load detected by the load detector. Accordingly, the load when the strain former 11 applies the vibration to the material MA can be maintained constant.

Evaluation Method Based on Frequency at which tan$\delta$ Exhibits Minimal Value or Maximal Value

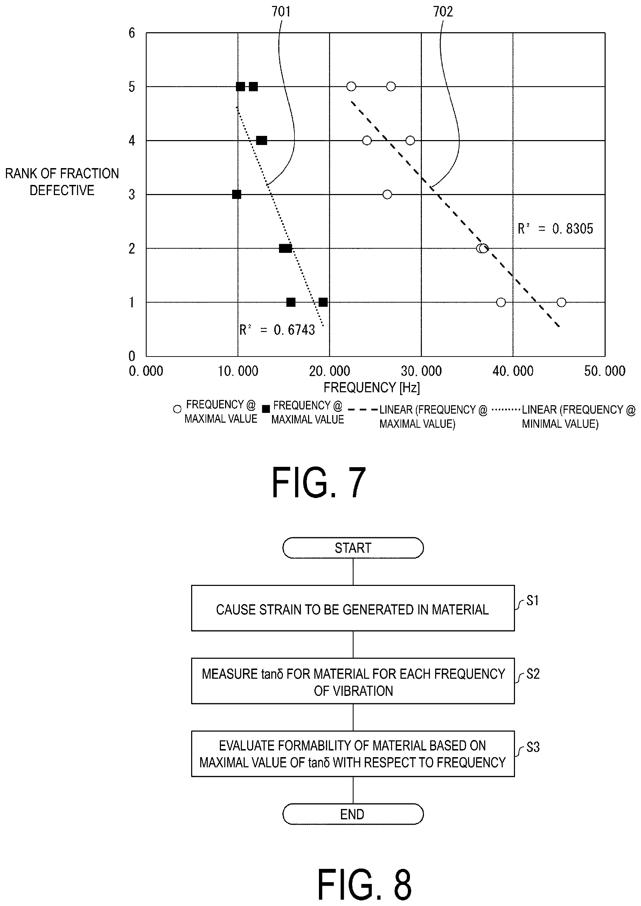

The inventors have studied a relationship between a fraction defective and a frequency at which tan$\delta$ exhibits minimal value or maximal value. FIG. 7 is a graph, obtained by the inventors, showing an example of the relationship between the fraction defective and the frequencies at which tan$\delta$ exhibits the minimal values or the maximal values. Measurement conditions and samples in the example of FIG. 7 are the same as those in the example of FIG. 6.

In the graph of FIG. 7, a vertical axis represents the fraction defective, and a horizontal axis represents the frequencies at which tan$\delta$ exhibits the minimal values or the maximal values. In the graph of FIG. 7, a plurality of data points respectively indicating actual measurement values of the fraction defective and the frequencies at which tan$\delta$ exhibits the minimal values or the maximal values are plotted. In FIG. 7, a black square plot represents data of the minimal value, and a white circle plot represents data of the maximal value. Straight lines 701 and 702 in FIG. 7 represent approximate straight lines obtained by linear regression using the plurality of data points. The straight line 701 represents an approximate straight line related to a data point of a frequency at which tan$\delta$ exhibits the minimal value. The straight line 702 represents an approximate straight line related to a data point of a frequency at which tan$\delta$ exhibits the maximal value.

As shown in FIG. 7, the frequency at which tan$\delta$ exhibits the minimal value or the maximal value was confirmed to tend to decrease as the fraction defective improved. In other words, the fraction defective was confirmed to tend to be worse as the frequency at which tan$\delta$ exhibits the minimal value or the maximal value increased. Thus, the straight lines 701 and 702 in the example of FIG. 7 have a negative inclination.

When the inventors calculated the coefficient of determination $R^2$ for the straight lines 701 and 702, $R^2 = 0.6743$ for the straight line 701 and $R^2 = 0.8305$ for the straight line 702. As described above, through the measurement results in the example of FIG. 7, the inventors have found that there was a high correlation between the fraction defective and the frequency at which tan$\delta$ exhibits the minimal value or the maximal value. In other words, the inventors have found that the frequency at which tan$\delta$ exhibits the minimal value or the maximal value was highly correlated with the formability of the material MA.

Evaluation Method Based on Frequency at which tan$\delta$ Exhibits Minimal Value or Maximal Value

Based on the above-described experimental results, the inventors have found a novel idea of "evaluating the formability of the material MA based on the frequency at which tan$\delta$ exhibits the minimal value or the maximal value when the array of the dispersoid in the material MA is disrupted".

The evaluation method according to an aspect of the present disclosure may include the strain forming step, the measurement step, and the evaluation step described above. Magnitude of the strain amount in the strain forming step may be sufficient to disrupt the array of the dispersoid in the material MA. According to the evaluation method, a minimal value or a maximal value of tan$\delta$ can be caused to be generated in a specific frequency region. Therefore, the formability of the material MA can be evaluated based on the frequency at which the minimal value is exhibited or the frequency at which the maximal value is exhibited. Therefore, the evaluation device 1 may be designed to be able to perform the strain forming step, the measurement step, and the evaluation step.

As an example, in the evaluation device 1, a threshold value corresponding to the frequency at which tan$\delta$ exhibits the minimal value or the frequency at which tan$\delta$ exhibits the maximal value may be set. The threshold value may be set as a frequency at which tan$\delta$ exhibits a minimal value or a frequency at which tan$\delta$ exhibits a maximal value, which corresponds to a predetermined fraction defective. Therefore, for example, with reference to the straight line 701, when a threshold value is set to the frequency at which tan$\delta$ exhibits the minimal value in the case where a strain amount is 0.5% so that the fraction defective reaches or exceeds Rank 3, the threshold value may be set to 13 Hz. With reference to a straight line 701b, when a threshold value is set to the frequency at which tan$\delta$ exhibits the maximal value in the case where the strain amount is 0.5% so that the fraction defective reaches or exceeds Rank 3, the threshold value may be set to 29 Hz.

The evaluator 33 may evaluate the formability of the material MA by comparing the frequency at which tan$\delta$ exhibits the minimal value or the frequency at which tan$\delta$ exhibits the maximal value with the threshold value. The evaluator 33 may determine that the formability of the material MA is favorable when the frequency at which tan$\delta$ exhibits the minimal value or the frequency at which tan$\delta$ exhibits the maximal value is equal to or less than the threshold value. As described above, when the frequency at which tan$\delta$ exhibits the minimal value or the maximal value is small, the material MA can be considered to have a physical property of being easily fluidized by small shearing force. Therefore, when the frequency at which tan$\delta$ exhibits the minimal value or the maximal value is equal to or less than the threshold value, the material MA is considered to be suitably coated onto a subject. When the material MA is a mixture of an electrode active material and an electrolyte, the subject may be a conductor constituting an electrode.

On the other hand, when the frequency at which tan$\delta$ exhibits the minimal value or the frequency at which tan $\delta$ exhibits the maximal value is less than the threshold value, the evaluator 33 may determine that the formability of the material MA is defective. As described above, when the frequency at which tan$\delta$ exhibits the minimal value or the maximal value is great, the material MA can be considered to have a physical property requiring great shearing force for fluidization. Therefore, the material MA is considered not to be suitably coated onto a conductor when the frequency at which tan$\delta$ exhibits the minimal value or the maximal value exceeds the threshold value.

When magnitude of strain caused to be generated in the material MA in the strain forming step is small, for example, less than 0.5%, the minimal value or the maximal value of tan$\delta$ tends to be small, and in the evaluation device 1, a threshold value corresponding to the minimal value or the maximal value of tan$\delta$ may be difficult to be set. However, even when the strain amount is small, a threshold value corresponding to the frequency at which tan$\delta$ exhibits the minimal value or the maximal value can be easily set. Therefore, the formability of the material MA based on the threshold value can be evaluated.

When viscosity of the material MA is high, that is, when |G*| is high, the material MA itself is likely to be brittle. In this case, in order to reduce a strain amount, a threshold value corresponding to the frequency at which tan$\delta$ exhibits the minimal value may be set. On the other hand, when the viscosity of the material MA is small, that is, when |G*| is small, the strain amount can be increased, and the maximal value of tan$\delta$ is increased, thereby facilitating the evaluation. In this case, a threshold value corresponding to the frequency at which tan$\delta$ exhibits the maximal value may be set.

Tan$\delta$ may have a minimal value or a maximal value in a certain frequency range, for example, from 10 to 12 Hz. In that case, tan$\delta$ continues to take a constant minimal value or maximal value within the range. In this case, as a frequency at which tan$\delta$ exhibits the minimal value or a frequency at which tan$\delta$ exhibits the maximal value, a minimum value in a frequency range at which tan$\delta$ exhibits the minimal value or the maximal value is used. In particular, tan$\delta$ often takes a minimal value in a certain frequency range. When tan$\delta$ takes a minimal value in a certain frequency range, a threshold value may be set as described above for a frequency at which tan$\delta$ exhibits the minimal value. As described above, a threshold value may be set for the minimal value of tan$\delta$ instead of the frequency at which tan$\delta$ exhibits the minimal value.

In the evaluation method based on the frequency at which tan$\delta$ exhibits the minimal value or the maximal value, the temperature of the material MA may be maintained constant during the strain forming step and the measurement step, in the same or similar manner as the evaluation method based on the minimal value or the maximal value of tan$\delta$. In the evaluation method based on the frequency at which tan$\delta$ exhibits the minimal value or the maximal value, the pressure when the measurement jig 10 (more specifically, the strain former 11) applies the vibration to the material MA may be maintained constant, as in the same or similar manner as the evaluation method based on the minimal value or the maximal value of tan$\delta$.

Example of Evaluation Method with Evaluation Device 1

FIG. 8 is a flowchart illustrating an example of an evaluation method according to the evaluation device 1. Before evaluation by the evaluation device 1, the strain former 11 is assumed to be in contact with the material MA placed at the tray TR.

The vibration controller 312 causes the strain former 11 to generate strain by applying vibration to the material MA (S1, the strain forming step). The measurer 32 measures tan$\delta$ for the strained material MA for each frequency of vibration (S2, the measurement step). The evaluator 33 evaluates formability of the material MA based on a maximal value of $\tan\delta$ with respect to the frequency (S3, the evaluation step). By the control described above, the evaluation device 1 can evaluate the formability of the material MA.

Conclusion

According to the evaluation method of an aspect of the present disclosure, the formability of the material MA having a relatively high viscosity can be accurately evaluated. Therefore, for example, in a case where an electrode body is manufactured by coating a material in a clay-like state onto a conductor, formability of the material can be accurately evaluated.

By accurately evaluating the formability of the material, occurrence of defective products due to usage of a material having low formability can be reduced. In other words, resources consumed for manufacturing defective products can be saved. Such an effect also contributes to achievement of, for example, the Goal 12 "Responsible Consumption and Production" of Sustainable Development Goals (SDGs) proposed by UN, or the like.

Implementation Example by Software

The functions of the evaluation device 1 (hereinafter, referred to as the "device") can be implemented by a program for causing a computer to function as the device and for causing the computer to function as each control block (particularly, each unit included in the control device 30) of the device.

In this case, the above device includes a computer including at least one control device (for example, a processor) and at least one storage device (for example, a memory) as hardware for executing the above program. By executing the program by the control device and the storage device, the functions described in the embodiment are implemented.

The above program may be recorded on at least one computer-readable non-transitory recording medium. This recording medium may be or need not be included in the device. In the latter case, the program may be supplied to the apparatus via any wired or wireless transmission medium.

Some or all of the functions of the control blocks can be implemented by logic circuits. For example, an integrated circuit in which logic circuits functioning as the control blocks are formed is also included in the scope of the present disclosure. In addition to this, for example, a quantum computer can implement the functions of the control blocks.

The several types of processing described in the embodiments may be executed by artificial intelligence (AI). In this case, the AI may operate on the control device or may operate on another device (such as, for example, an edge computer or a cloud server).

Supplementary Note

The invention according to the present disclosure has been described above based on the drawings and examples. However, the invention according to the present disclosure is not limited to each embodiment described above. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, note that a person skilled in the art can easily make different variations or modifications based on the present disclosure. Note that these variations or modifications are included within the scope of the present disclosure.

REFERENCE SIGNS

1 Evaluation device
11 Strain former
20 Thermoelectric conversion element
30 Control device
31 Drive controller
32 Measurer
33 Evaluator
311 Pressure controller
313 Temperature controller

MA Material

## Claims

1. An evaluation method comprising:
   forming strain to be generated by applying vibration to a material containing a dispersion medium and particulate dispersoid dispersed in the dispersion medium:

   measuring loss tangent for the material in which the strain is generated, for each frequency of the vibration: and
   evaluating formability of the material based on (i) a minimal value or a maximal value of the loss tangent with respect to the frequency, or (ii) a frequency at which the minimal value is exhibited or a frequency at which the maximal value is exhibited, wherein
   magnitude of the strain caused to be generated in the material in the forming is sufficient to disrupt an array of the dispersoid in the material.

2. The evaluation method according to claim 1, wherein
   the magnitude of the strain caused to be generated in the material in the forming is equal to or greater than 0.1%.

3. The evaluation method according to claim 1 or 2, wherein
   the material is in a clay-like state.

4. The evaluation method according to any one of claims 1 to 3, wherein
   a ratio of a mass of the dispersoid to a mass of the material is equal to or greater than 60 wt%.

5. The evaluation method according to any one of claims 1 to 4, wherein
   a temperature of the material is maintained constant during the forming and the measuring.

6. The evaluation method according to any one of claims 1 to 5, wherein
   in the forming and the measuring, pressure when a measurement jig that applies the vibration to the material applies the vibration to the material is maintained constant.

7. An evaluation device comprising:
   a strain former configured to generate strain by applying vibration to a material containing a dispersion medium and particulate dispersoid dispersed in the dispersion medium:

   a measurer configured to measure a loss tangent for the material in which the strain is generated, for each frequency of the vibration: and
   an evaluator configured to evaluate formability of the material based on (i) a minimal value or a maximal value of the loss tangent with respect to the frequency, or (ii) a frequency at which the minimal value is exhibited or a frequency at which the maximal value is exhibited, wherein
   magnitude of the strain caused to be generated in the material by the strain former is sufficient to disrupt an array of the dispersoid in the material.

FIG. 1

FIG. 2

FIG. 3

401 402 403 404

|G*|

30,000,000

3,000,000

300,000

1          10          100

FREQUENCY (Hz)

# FIG. 4

504 503 502 501

tan δ

1.2

1

0.8

0.6

0.4

0.2

0

1          10          100

FREQUENCY (Hz)

# FIG. 5

FIG. 6

FIG. 7

FIG. 8

## INTERNATIONAL SEARCH REPORT

| International application No. |
|---|
| **PCT/JP2022/042461** |

**A. CLASSIFICATION OF SUBJECT MATTER**

*G01N 19/00*(2006.01)i; *G01N 3/00*(2006.01)i; *G01N 11/14*(2006.01)i
FI:    G01N19/00 B; G01N19/00 D; G01N11/14 F; G01N3/00 K

According to International Patent Classification (IPC) or to both national classification and IPC

**B. FIELDS SEARCHED**

Minimum documentation searched (classification system followed by classification symbols)

G01N19/00; G01N3/00; G01N11/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/190355 A1 (HONDA MOTOR CO., LTD.) 15 September 2022 (2022-09-15) paragraphs [0014], [0023]-[0038], [0041]-[0049] | 1-7 |
| A | WO 2019/082587 A1 (NEC ENERGY DEVICES, LTD.) 02 May 2019 (2019-05-02) paragraphs [0009], [0018]-[0020], [0097]-[0101] | 1-7 |
| A | WO 2019/235133 A1 (SUMIKA CHEMICAL ANALYSIS SERVICE, LTD.) 12 December 2019 (2019-12-12) paragraphs [0087]-[0092], fig. 11 | 1-7 |
| A | WO 2016/006235 A1 (HIGHFREQUENCY VISCOELASTICITY CORP.) 14 January 2016 (2016-01-14) entire text, all drawings | 1-7 |
| A | JP 7-260673 A (NGK INSULATORS, LTD.) 13 October 1995 (1995-10-13) entire text, all drawings | 1-7 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/042461**

| | C. | DOCUMENTS CONSIDERED TO BE RELEVANT | |
|---|---|---|---|
| Category* | | Citation of document, with indication, where appropriate, of the relevant passages | Relevant to claim No. |
| A | | KUSANO, Takumi, Rheological behavior of concentrated slurry and wet granules for lithium ion battery electrodes, Advanced Powder Technology, 2020, 31, pages 4491-4499, https://doi.org/10.1016/j.apt.2020.09.023<br>entire text, all drawings | 1-7 |
| A | | 五十野善信, 動的粘弾性とは何か, 日本ゴム協会誌, 2001, vol. 74, no. 6, pages 212-217, (Journal of the Society of Rubber Science and Technology, Japan), non-official translation (ISONO, Yoshinobu, What is dynamic viscoelasticity?)<br>entire text, all drawings | 1-7 |

Form PCT/ISA/210 (second sheet) (January 2015)

**INTERNATIONAL SEARCH REPORT**
Information on patent family members

International application No.

**PCT/JP2022/042461**

| Patent document cited in search report | | | Publication date (day/month/year) | Patent family member(s) | | | Publication date (day/month/year) |
|---|---|---|---|---|---|---|---|
| WO | 2022/190355 | A1 | 15 September 2022 | (Family: none) | | | |
| WO | 2019/082587 | A1 | 02 May 2019 | (Family: none) | | | |
| WO | 2019/235133 | A1 | 12 December 2019 | (Family: none) | | | |
| WO | 2016/006235 | A1 | 14 January 2016 | US | 2017/0168020 | A1 | |
| | | | | entire text, all drawings | | | |
| | | | | EP | 3168598 | A1 | |
| | | | | CN | 106133502 | A | |
| JP | 7-260673 | A | 13 October 1995 | (Family: none) | | | |

Form PCT/ISA/210 (patent family annex) (January 2015)

**EP 4 621 383 A1**

## REFERENCES CITED IN THE DESCRIPTION

**Patent documents cited in the description**

- JP 7260673 A